(19) **Europäisches Patentamt**

**European Patent Office**

**Office européen des brevets**

(11) **EP 1 383 315 B1**

(12) **EUROPEAN PATENT SPECIFICATION**

(45) Date of publication and mention
of the grant of the patent:
**17.08.2005 Bulletin 2005/33**

(51) Int Cl.⁷: **H04N 5/272**

(21) Application number: **03254044.5**

(22) Date of filing: **26.06.2003**

(54) **Video processing**

Videoverarbeitung

Traitement vidéo

(84) Designated Contracting States:
**DE FR GB**

(30) Priority: **17.07.2002 GB 0216683**

(43) Date of publication of application:
**21.01.2004 Bulletin 2004/04**

(73) Proprietor: **SONY UNITED KINGDOM LIMITED**
**Weybridge KT13 0XW (GB)**

(72) Inventors:
• **Witt, Sarah Elizabeth**
**Basingstoke, Hampshire RG23 8QL (GB)**

• **Turner, Alan Hogg**
**Basingstoke, Hampshire RG24 8XF (GB)**

(74) Representative: **Turner, James Arthur et al**
**D Young & Co**
**120 Holborn**
**London EC1N 2DY (GB)**

(56) References cited:
**US-A- 6 088 036**

**Description**

This invention relates to video processing.

The term "video effects" includes a variety of processes which can be applied to video images for display. Some examples are so-called "warp" effects (e.g. page turns, ripple effects), image cropping, texturing, picture-in-picture, chroma-keying and light-source rendering. With current technology, it is almost universal that these effects are applied digitally, so the equipment to do this is often referred to as "digital video effects" (DVE) or "digital multi-effects" (DME) equipment.

DVE equipment can be considered as two categories, real-time and non-real time. Real-time DVE processors have tended to be expensive, of the order of many thousands of pounds, being aimed at the professional market. An example of a real-time DVE processor is the DME 7000 supplied by Sony Corporation. On the other hand, non-real-time DVE equipment aimed at the domestic market can take the form of a personal computer (PC) peripheral card with appropriate software. Such a system might cost in the order of hundreds of pounds and typically allows the user to upload video material (e.g. camcorder material) for editing and effects processing. The effects processing and rendering is then carried out in non-real-time, often taking many hours depending on the complexity of the effects and the processing speed of the host PC. Finally, the rendered material is output for storage on tape or other medium. An example of this type of system is the "Studio DVPlus" supplied by Pinnacle.

The need to provide some anti-aliasing is common to both types of DVE system. Anti-aliasing is the process of blurring sharp edges in the processed images to avoid jagged, "stair-case" or flickering lines appearing when the images are displayed on a discrete pixel display screen. Anti-aliasing is a general term for a family of techniques, but basically there is a need to detect sharp edges and then to apply some sort of filtering process to the image areas around the detected edges. EP-A-0 686 941 describes a technique of edge detection and filtering based on the edge detection information.

EP-A-0 686 941 describes a "supersampling" anti-aliasing process whereby each display pixel is resolved into m x n sub-pixels. The calculations required to generate images for output are carried out on the sub-pixels, and bandwidth limiting is also applied to reduce flicker. The sub-pixels are then converted back to display pixels by a weighted averaging process. However, this is very expensive in terms of the processing capacity needed to carry out at least m x n extra calculations for each display pixel.

US6088036 discloses superimposition of a primitive based foreground image on a background image wherein anti aliasing filtering is performed on the edges of the foreground image.

Some equipment, such as video games machines, generates images for display in real time using a polygon-based rendering method. An image to be generated or rendered is divided up into a large number of tessellated primitive polygons, each polygon being a small image area such as a triangular group of pixels. For example, the Playstation 2 supplied by Sony Computer Entertainment Inc can use several different types of graphics primitives, particularly: points, lines, line strips (a group of continuous lines sharing endpoints), triangles, triangle strips (a group of continuous triangles sharing sides), triangle fans (a group of continuous triangles sharing one vertex) and sprites (independent rectangles). In fact, the Playstation 2 can process geometry calculations for up to 66 million polygons per second and curved surface generation at up to 16 million polygons per second.

The Playstation 2 can perform anti-aliasing for each line or triangle in respect of the following primitives: line, line strip, triangle, triangles strip and triangle fan. Anti-aliasing is achieved by detecting the so-called "coverage" of each edge pixel, that is to say, how much of the true area of the primitive covers that pixel position. Then, a process called alpha-blending is used to combine the colour of the edge pixel with the colour of a "destination" pixel, i.e. a pixel away from that primitive, in a ratio dependent on the coverage variable. Within an image area, the edges of all of the primitives are subjected to this anti-aliasing process, even though many of them may well be internal to that image area. The whole of this process is carried out in real time.

This process is well-suited to games programs, where the order in which graphics primitives are drawn can be carefully controlled. If the image rendering is controlled so that the background objects are drawn first then the quality of the final anti-aliased image will be acceptable. However, when rendering images to create video effects it is difficult to control the order in which the graphics primitives are drawn so the background images are not always drawn first. Whenever the background is not drawn first, this technique would give a subjectively disturbing patterning over the image, showing the boundaries of the polygons as regions of blurring and/or reduced spatial detail.

This invention provides a video processing method for preparing an anti-aliased foreground image for display over an image background, the method comprising the steps of:

(i) preparing the image background for display;
(ii) generating an original foreground image by manipulation of a contiguous group of graphics primitives;
(iii) applying anti-aliasing filtering to the edges of each primitive to generate a primitive-processed image;
(iv) superposing the primitive-processed image over the image background; and

(v) superposing the original foreground image over the primitive-processed image.

Various respective aspects and features of the invention are defined in the appended claims.

Embodiments of the invention will now be described, by way of example only, with reference to the accompanying drawings in which:

Figure 1 schematically illustrates the overall system architecture of the PlayStation2;
Figure 2 schematically illustrates the architecture of an Emotion Engine;
Figure 3 schematically illustrates the configuration of a Graphic synthesiser;
Figure 4 is a schematic block diagram illustrating the drawing processing performed by the Graphics Synthesiser;
Figures 5A to 5G illustrate alternative primitive graphics objects used by the Graphic Synthesiser;
Figure 6 schematically illustrates a system architecture having a peripheral component interconnect (PCI) plug-in module for digital video input/output;
Figure 7 schematically illustrates a Universal Serial Bus (USB) analogue input module for importing video and audio data into the PlayStation2;
Figure 8 schematically illustrates an embodiment of the invention in which the circuitry required to implement the real-time video editing is provided on a PCI card fitted to a standard personal computer;
Figure 9A schematically illustrates a primitive processed image in which standard Playsation2 anti-aliasing of graphics primitives has been applied;
Figure 9B schematically illustrates an image created by superposing an original non anti-aliased image version of the image over the primitive processed version of Figure 9A;
Figure 9C schematically illustrates the process by which horizontal and vertical filtering of a non anti-aliased image version is performed to produce a softened image;
Figure 9D schematically illustrates how a final anti-aliased image is produced by replacing portions of image version 2 of Figure 9B with corresponding portions of the softened image of Figure 9C; and
Figure 10 is a flow chart outlining the stages involved in construction of the final version of the anti-aliased image.

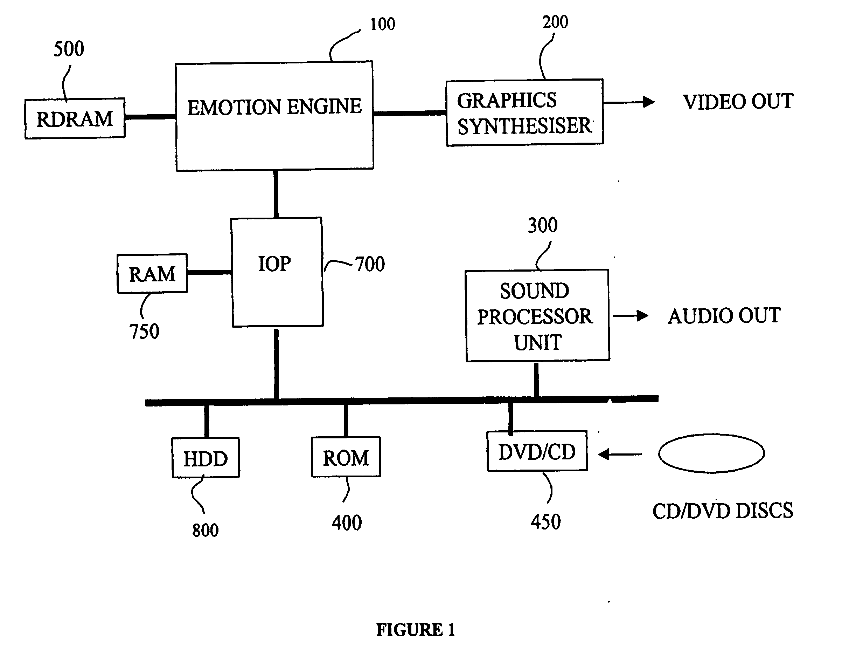

Figure 1 schematically illustrates the overall system architecture of the PlayStation2. The system comprises: an Emotion Engine 100; a Graphics Synthesiser 200; a sound processor unit 300 having dynamic random access memory (DRAM); a read only memory (ROM) 400; a compact disc (CD) and digital versatile disc (DVD) unit 450; a Rambus Dynamic Random Access Memory (RDRAM) unit 500; an input/output processor 700 with dedicated RAM 750; and an external hard disk drive (HDD) 800.

The Emotion Engine 100 is a 128-bit Central Processing Unit (CPU) that has been specifically designed for efficient simulation of 3 dimensional (3D) graphics for games applications. The Emotion Engine components include a data bus, cache memory and registers, all of which are 128-bit. This facilitates fast processing of large volumes of multi-media data. Conventional PCs, by way of comparison, have a basic 64-bit data structure. The floating point calculation performance of the PlayStation2 is 6.2 GFLOPs. The Emotion Engine also comprises MPEG2 decoder circuitry which allows for simultaneous processing of 3D graphics data and DVD data. The Emotion Engine performs geometrical calculations including mathematical transforms and translations and also performs calculations associated with the physics of simulation objects, for example, calculation of friction between two objects. It produces sequences of image rendering commands which are subsequently utilised by the Graphics Synthesiser 200. The image rendering commands are output in the form of display lists. A display list is a sequence of drawing commands that specifies to the Graphics Synthesiser which primitive graphic objects (e.g. points, lines, triangles, sprites) to draw on the screen and at which co-ordinates. Thus a typical display list will comprise commands to draw vertices, commands to shade the faces of polygons, render bitmaps and so on. The Emotion Engine 100 can asynchronously generate multiple display lists.

The Graphics Synthesiser 200 is a video accelerator that performs rendering of the display lists produced by the Emotion Engine 100. The Graphics Synthesiser 200 includes a graphics interface unit (GIF) which handles, tracks and manages the multiple display lists. The rendering function of the Graphics Synthesiser 200 can generate image data that supports several alternative standard output image formats, i.e., NTSC/PAL, High Definition Digital TV and VESA. In general, the rendering capability of graphics systems is defined by the memory bandwidth between a pixel engine and a video memory, each of which is located within the graphics processor. Conventional graphics systems use external Video Random Access Memory (VRAM) connected to the pixel logic via an off-chip bus which tends to restrict available bandwidth. However, the Graphics Synthesiser 200 of the PlayStation2 provides the pixel logic and the video memory on a single high-performance chip which allows for a comparatively large 38.4 Gigabyte per second memory access bandwidth. The Graphics Synthesiser is theoretically capable of achieving a peak drawing capacity of 75 million polygons per second. Even with a full range of effects such as textures, lighting and transparency, a sustained rate of 20 million polygons per second can be drawn continuously. Accordingly, the Graphics Synthesiser 200 is capable of rendering a film-quality image.

The input/output processor 700 has 2 Universal Serial Bus (USB) ports and an IEEE 1394 port (iLink is the Sony Corporation implementation of IEEE 1394 standard). The IOP 700 handles all USB, iLink and game controller data traffic. For example when a user is playing a game, the IOP 700 receives data from the game controller and directs it to the Emotion Engine 100 which updates the current state of the game accordingly. The IOP 700 has a Direct Memory Access (DMA) architecture to facilitate rapid data transfer rates. DMA involves transfer of data from main memory to a device without passing it through the CPU. The USB interface is compatible with Open Host Controller Interface (OHCI) and can handle data transfer rates of between 1.5 Mbps and 12 Mbps. Provision of these interfaces mean that the PlayStation2 is potentially compatible with peripheral devices such as video cassette recorders (VCRs), digital cameras, set-top boxes, printers, keyboard, mouse and joystick.

The Sound Processor Unit (SPU) 300 is effectively the soundcard of the system which is capable of recognising 3D digital sound using Digital Theater Surround (DTS®) sound and AC-3 (also known as Dolby Digital) which is the sound format used for digital versatile disks (DVDs).

The main memory supporting the Emotion Engine 100 is the RDRAM (Rambus Dynamic Random Access Memory) module 500 produced by Rambus Incorporated. This RDRAM memory subsystem comprises RAM, a RAM controller and a bus connecting the RAM to the Emotion Engine 100.

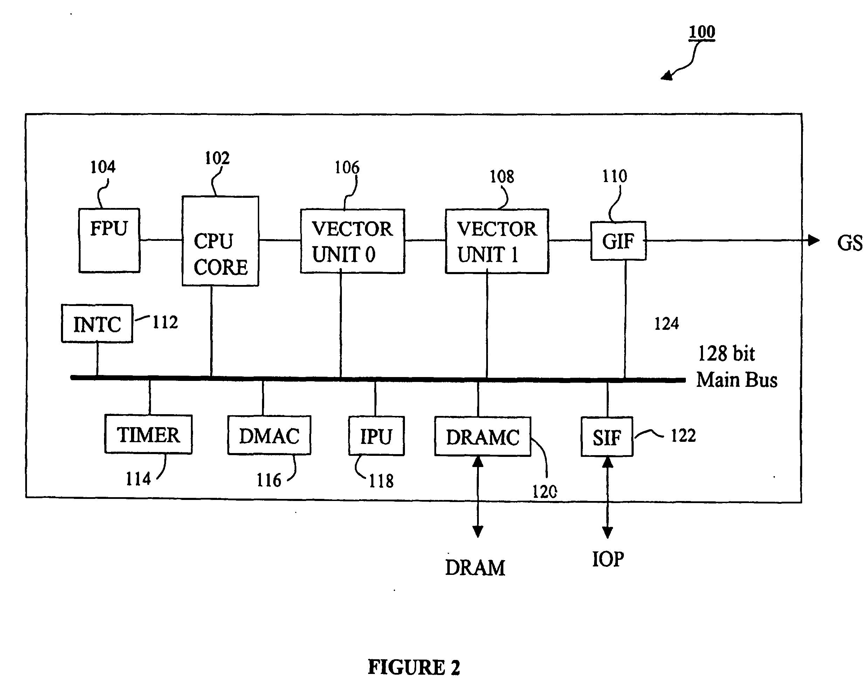

Figure 2 schematically illustrates the architecture of the Emotion Engine 100 of Figure 1. The Emotion Engine 100 comprises: a floating point unit (FPU) 104; a central processing unit (CPU) core 102; vector unit zero (VU0) 106; vector unit one (VU1) 108; a graphics interface unit (GIF) 110; an interrupt controller (INTC) 112; a timer unit 114; a direct memory access controller 116; an image data processor unit (IPU) 116; a dynamic random access memory controller (DRAMC) 120; a sub-bus interface (SIF) 122; and all of these components are connected via a 128-bit main bus 124.

The CPU core 102 is a 128-bit processor clocked at 300 MHz. The CPU core has access to 32 MB of main memory via the DRAMC 120. The CPU core 102 instruction set is based on MIPS III RISC with some MIPS IV RISC instructions together with additional multimedia instructions. MIPS III and IV are Reduced Instruction Set Computer (RISC) instruction set architectures proprietary to MIPS Technologies, Inc. Standard instructions are 64-bit, two-way superscalar, which means that two instructions can be executed simultaneously. Multimedia instructions, on the other hand, use 128-bit instructions via two pipelines. The CPU core 102 comprises a 16KB instruction cache, an 8KB data cache and a 16KB scratchpad RAM which is a portion of cache reserved for direct private usage by the CPU.

The FPU 104 serves as a first co-processor for the CPU core 102. The vector unit 106 acts as a second co-processor. The FPU 104 comprises a floating point product sum arithmetic logic unit (FMAC) and a floating point division calculator (FDIV). Both the FMAC and FDIV operate on 32-bit values so when an operation is carried out on a 128-bit value (composed of four 32-bit values) an operation can be carried out on all four parts concurrently. For example adding 2 vectors together can be done at the same time.

The vector units 106 and 108 perform mathematical operations and are essentially specialised FPUs that are extremely fast at evaluating the multiplication and addition of vector equations. They use Floating-Point Multiply-Adder Calculators (FMACs) for addition and multiplication operations and Floating-Point Dividers (FDIVs) for division and square root operations. They have built-in memory for storing micro-programs and interface with the rest of the system via Vector Interface Units (VIFs). Vector Unit Zero 106 can work as a coprocessor to the CPU core 102 via a dedicated 128-bit bus 124 so it is essentially a second specialised FPU. Vector Unit One 108, on the other hand, has a dedicated bus to the Graphics synthesiser 200 and thus can be considered as a completely separate processor. The inclusion of two vector units allows the software developer to split up the work between different parts of the CPU and the vector units can be used in either serial or parallel connection.

Vector unit zero 106 comprises 4 FMACS and 1 FDIV. It is connected to the CPU core 102 via a coprocessor connection. It has 4 Kb of vector unit memory for data and 4 Kb of micro-memory for instructions. Vector unit zero 106 is useful for performing physics calculations associated with the images for display. It primarily executes non-patterned geometric processing together with the CPU core 102.

Vector unit one 108 comprises 5 FMACS and 2 FDIVs. It has no direct path to the CPU core 102, although it does have a direct path to the GIF unit 110. It has 16 Kb of vector unit memory for data and 16 Kb of micro-memory for instructions. Vector unit one 108 is useful for performing transformations. It primarily executes patterned geometric processing and directly outputs a generated display list to the GIF 110.

The GIF 110 is an interface unit to the Graphics Synthesiser 200. It converts data according to a tag specification at the beginning of a display list packet and transfers drawing commands to the Graphics Synthesiser 200 whilst mutually arbitrating multiple transfer. The interrupt controller (INTC) 112 serves to arbitrate interrupts from peripheral devices, except the DMAC 116.

The timer unit 114 comprises four independent timers with 16-bit counters. The timers are driven either by the bus clock (at 1/16 or 1/256 intervals) or via an external clock. The DMAC 116 handles data transfers between main memory and peripheral processors or main memory and the scratch pad memory. It arbitrates the main bus 124 at the same time. Performance optimisation of the DMAC 116 is a key way by which to improve Emotion Engine performance. The image processing unit (IPU) 118 is an image data processor that is used to expand compressed animations and texture images. It performs I-PICTURE Macro-Block decoding, colour space conversion and vector quantisation. Finally, the sub-bus interface (SIF) 122 is an interface unit to the IOP 700. It has its own memory and bus to control I/O devices such as sound chips and storage devices.

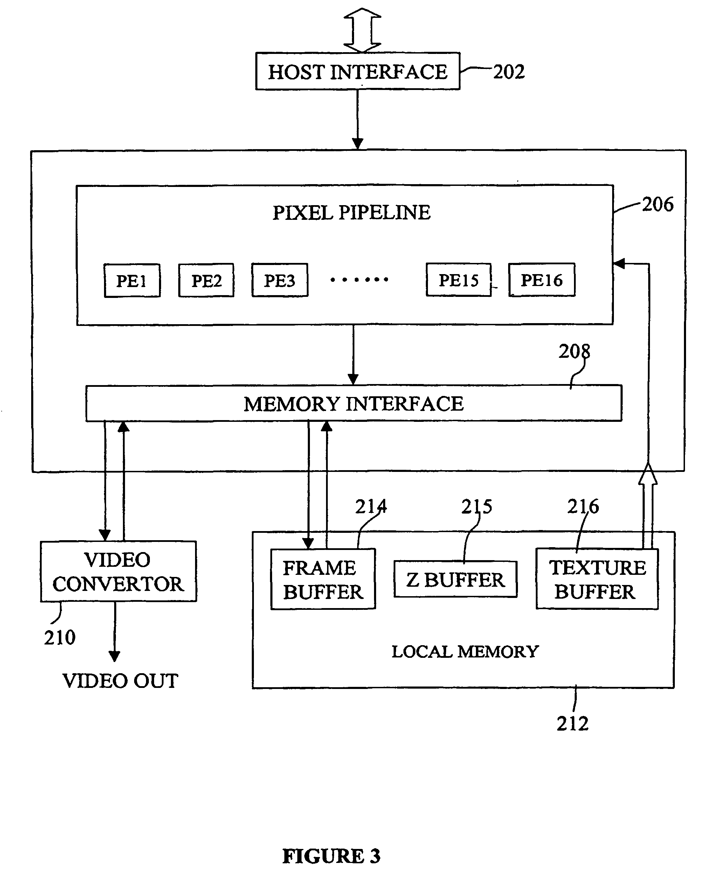

Figure 3 schematically illustrates the configuration of the Graphic Synthesiser 200. The Graphics Synthesiser comprises: a host interface 202; a set-up / rasterizing unit 204; a pixel pipeline 206; a memory interface 208; a local memory 212 including a frame page buffer 214 and a texture page buffer 216; and a video converter 210.

The host interface 202 transfers data with the host (in this case the CPU core 102 of the Emotion Engine 100). Both drawing data and buffer data from the host pass through this interface. The output from the host interface 202 is supplied to the graphics synthesiser 200 which develops the graphics to draw pixels based on vertex information received from the Emotion Engine 100, and calculates information such as RGBA value, depth value (i.e. Z-value), texture value and fog value for each pixel. The RGBA value specifies the red, green, blue (RGB) colour components and the A (Alpha) component represents opacity of an image object. The Alpha value can range from completely transparent to totally opaque. The pixel is supplied to the pixel pipeline 206 which performs processes such as texture mapping, fogging and Alpha-blending (as explained below) and determines the final drawing colour based on the calculated pixel information.

The pixel pipeline 206 comprises 16 pixel engines PE1, PE2 .. PE16 so that it can process a maximum of 16 pixels concurrently. The pixel pipeline 206 and runs at 150MHz with 32-bit colour and a 32-bit Z-buffer. The memory interface 208 reads data from and writes data to the local Graphics Synthesiser memory 212. It writes the drawing pixel values (RGBA and Z) to memory at the end of a pixel operation and reads the pixel values of the frame buffer 214 from memory. These pixel values read from the frame buffer 214 are used for pixel test or Alpha-blending. The memory interface 208 also reads from local memory 212 the RGBA values for the current contents of the frame buffer. The local memory 212 is a 32 Mbit (4 MB) memory that is built-in to the Graphics Synthesiser 200. It can be organised as a frame buffer 214, texture buffer 216 and also a 32-bit Z-buffer 215. The frame buffer 214 is the portion of video memory where pixel data such as colour information is stored.

The Graphics Synthesiser uses a 2D to 3D texture mapping process to add visual detail to 3D geometry. Each texture may be wrapped around a 3D image object and is stretched and skewed to give a 3D graphical effect. The texture buffer is used to store the texture information for image objects. The Z-buffer 215 (also known as depth buffer) is the memory available to store the depth information for a pixel. Images are constructed from basic building blocks known as graphics primitives or polygons. When a polygon is rendered with Z-buffering, the depth value of each of its pixels is compared with the corresponding value stored in the Z-buffer. If the value stored in the Z-buffer is greater than or equal to the depth of the new pixel value then this pixel is determined visible so that it should be rendered and the Z-buffer will be updated with the new pixel depth. If however the Z-buffer depth value is less than the new pixel depth value the new pixel value is behind what has already been drawn and will not be rendered.

The local memory 212 has a 1024-bit read port and a 1024-bit write port for accessing the frame buffer and Z-buffer and a 512-bit port for texture reading. The video converter 210 is operable to display the contents of the frame memory in a specified output format.

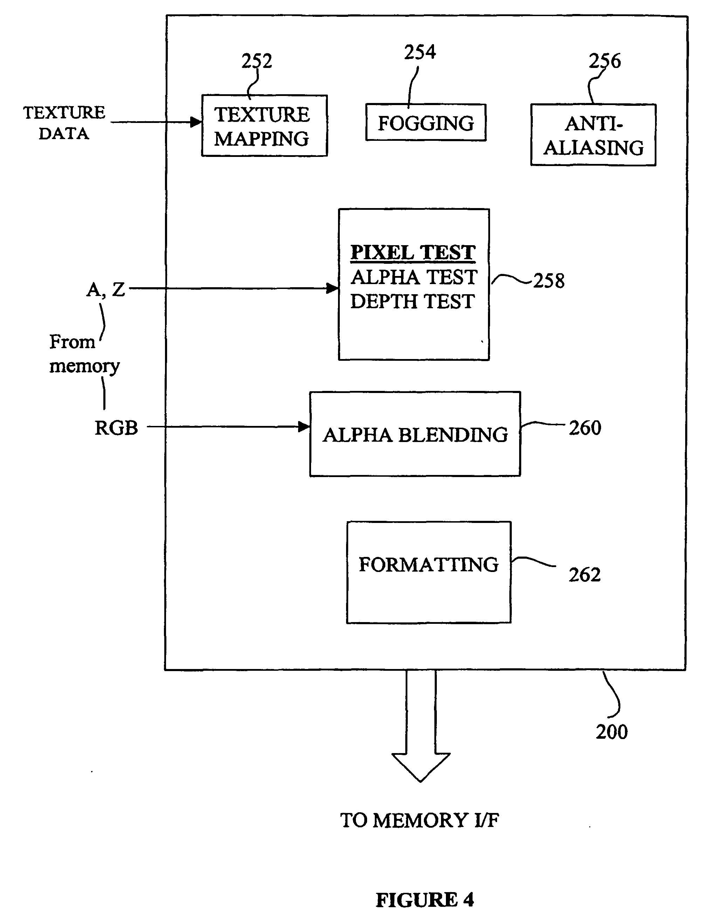

Figure 4 is a schematic block diagram illustrating the drawing processing performed by the Graphics Synthesiser 200. The drawing processing modules comprise: a texture mapping module 252; a fogging module 254; an anti-aliasing module 256; a pixel test module 258; an alpha blending module 260; and a formatting module 262.

As explained above, the Graphics Synthesiser 200 receives display lists from the Emotion Engine 100. Each display list is pre-processed such that a gradient (e.g. shading coefficient) and other parameters necessary for drawing graphics primitives are calculated based on vertex information contained in the display list. The pixels of a graphics primitive are generated by a Digital Differential Algorithm (DDA) during a process known as rasterizing. This rasterizing process involves concurrently generating values for 8 or 16 pixels. Essentially a 3D image is transformed into a set of coloured pixels and the colour assigned to each pixel will depend on light sources, the position of the object that the pixel represents, the texture applied to the object and so on. An RGBA value, Z-value, texture value and fog-value is calculated for each pixel based on the gradient value calculated during pre-processing and this data is passed to the pixel pipeline 206.

The texture mapping module 252 maps textures to pixels. Each texture has its own limited palette of colours which are referenced via a colour look-up table (CLUT). The CLUT is needed for 4 or 8 bit colours but not for e.g. 16 or 32 bit colours. The texture mapping module 252 applies a texture function to a texture CLUT-RGBA value read from the texture page buffer 216 and also to the RGBA value (as calculated for pixel values of each graphics primitive using the DDA). The fogging process carried out by the fogging module 254 involves blending part of an image scene with a given colour. This technique can be used to represent fog or to make distant graphics primitives fade away.

The anti-aliasing module 256 performs the process of anti-aliasing which involves smoothing of lines and curves of an image by blending several colours. It is intended to eliminate the undesired jagged or stair-stepped appearance of unfiltered angled lines in an image or graphic. To draw a perfectly smooth diagonal or curved line on a screen would require that only partial areas of some pixels be coloured according to the line. However the screen is composed of a discrete set of pixels and a given pixel cannot be partially coloured so that several smaller lines have to be drawn to represent the desired smooth continuous line. For example if you want to draw a thick black diagonal line on a white background, unless this line is positioned parallel to the screen's main diagonal then the edges of the line will be jagged. The solution provided by anti-aliasing is to colour the pixels associated with the jagged edges in various shades of grey thereby blurring but smoothing the edges of the line.

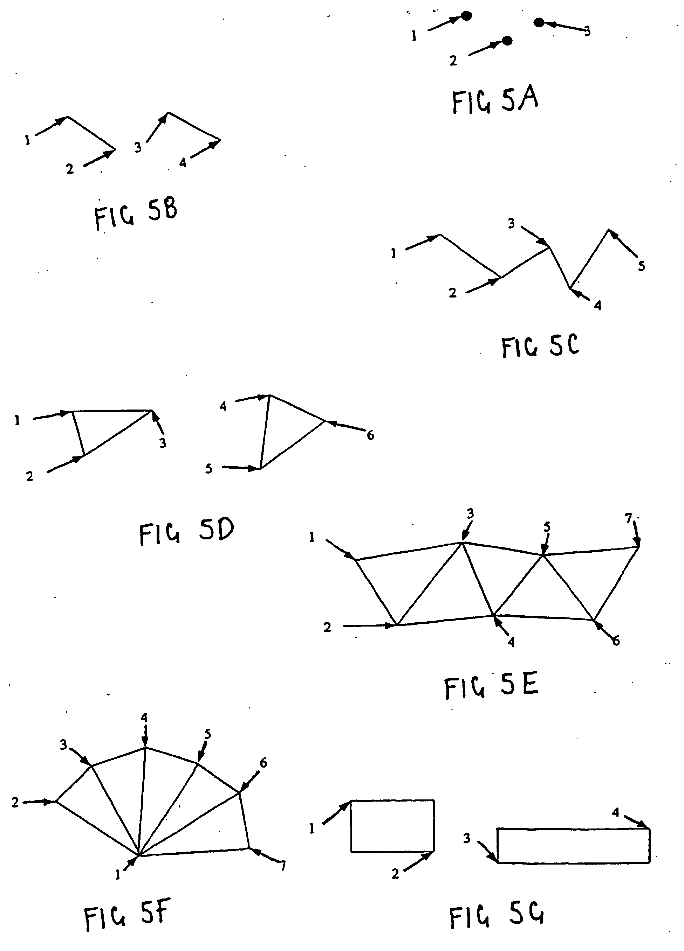

The anti-aliasing module 256 of the Graphics Synthesiser can perform anti-aliasing for the following graphics primitives: Line, LineStrip, Triangle, Triangle Strip and TriangleFan. These are described below with reference to Figure 5. The anti-aliasing is actually performed by calculating a "coverage" value which is ratio of the area of the actual line which covers each pixel at the edge of the graphics primitive. The coverage value is assumed to be the Alpha value for the pixel and a process known as Alpha-blending (described below) is performed on the destination colour (i.e. the colour in the background of the graphics primitive) and the primitive colour. To achieve proper anti-aliasing it is necessary to draw graphics primitives in a positional order starting with those furthest in the background and finishing with those closest to the viewer/screen Anti-aliasing is separately performed on the perimeter of each graphics primitive.

The pixel test module 258 receives the RGB values, Alpha values and x, y, z pixel co-ordinates. The Alpha values and Z-values are retrieved by the pixel test module 258 from local memory 212 via the memory interface 208. The pixel test module performs a sequence of tests to determine whether or not to draw a pixel in dependence upon its XYZ and RGBA values. The pixel test does not change the pixel value. The sequence of tests comprises: a scissoring test; an Alpha test; a destination Alpha test and a depth test. The scissoring test checks whether the XYZ co-ordinate values of the pixel to be drawn are in the rectangular (scissoring) area specified in the window co-ordinate system. Pixels determined to be outside the scissoring area are not processed further. The Alpha test involves comparing the Alpha value of the drawing pixel and a pre-set standard Alpha value. Processing continues if the pixel meets the predetermined comparison condition. The Alpha Destination test checks the Alpha value of the pixel for drawing in the frame buffer (i.e. checks the Destination Value). Finally the depth test compares the Z value of the drawing pixel and the corresponding Z value in the Z buffer.

The Alpha Blending module 260 performs a process known as Alpha blending which is a technique used to produce transparency effects (i.e. to represent such things as glass, mist or water), to blend two textures or to map one texture on top of another texture without totally obscuring the texture underneath. More generally, this Alpha-blending technique can be used to blend what has already been rendered (and is thus already in the frame buffer) with another texture.

When Alpha blending is performed two colours are combined: a source colour and a destination colour. The source colour is the contribution from the (at least partially) transparent foreground object. The destination colour is the colour that already exists at the pixel location being considered and thus is the result of rendering some other object that is behind the transparent object. The destination colour is the colour that will be visible through the transparent object. Each coloured pixel within each texture is assigned an Alpha value representing its degree of transparency. The Alpha values are then used to calculate weighted averages of the colours of the two textures for each pixel. For example the following alpha-blending formula may be used:

$$Final\ colour = ObjectColour * SourceBlendFactor + PixelColour * DestinationBlendFactor$$

where *ObjectColour* is the contribution from the graphics primitive being rendered at the current pixel position and *PixelColour* is the contribution from the frame buffer at the current pixel location whereas *SourceBlendFactor* and *DestinationBlendFactor* are predetermined weighting factors. The Alpha Blending module retrieves RGB values from local memory 212. Blending of the RGB value of a pixel of an object currently being rendered and the corresponding RGB value in frame memory 214 is implemented according to the Alpha value of the pixel or the Alpha value in the frame memory.

Following processing by the Alpha Blending Module 260, the data is supplied to the formatting module 262 where the pixel values for drawing are converted to the data format of the frame buffer. Dithering and colour clamping may also be applied at this stage. The dithering process involves creating a new colour by blending several colours which are already available. This technique can be used to give the illusion that an image was rendered with 64K colours although it was actually rendered with 256 colours. Colour clamping is a process whereby the RGB value of a pixel is controlled to be within the range 0-255 (8-bit value). Since the value of a pixel occasionally exceeds this range after operations such as Alpha-blending the result is stored with 9-bits for each RGB value.

Output from the data formatting module is supplied to the memory interface 208 (Figure 3) via which read/write is performed to local memory 212. The operations supported by the memory interface include: writing drawing pixel values RGBA and Z to memory following a pixel operation; reading pixel values into the frame buffer e.g. during pixel test and alpha-blending processes; and reading RGBA values from memory for display on the screen.

Figures 5A to 5G illustrate alternative primitive graphics objects used by the Graphic Synthesiser 200. The alternative graphics primitives comprise a Point, a Line, a LineStrip, a Triangle, a TriangleStrip, a TriangleFan and a Sprite. Figure 5A illustrates three independent points, each of which is drawn with a single piece of vertex information. Figure 5B shows two independent Lines, each of which is drawn with 2 pieces of vertex information. Figure 5C illustrates a LineStrip comprising 4 lines which share endpoints. In this case the first line is drawn with two pieces of vertex information whereas succeeding lines are drawn with a single piece of vertex information. Figure 5D shows two independent Triangles, each of which is drawn using 3 pieces of vertex information. Figure 5E illustrates a TriangleStrip comprising 5 triangles which are continuous in that they share sides. In this case the first triangle is drawn using 3 pieces of vertex information and each succeeding triangles is drawn whenever a single piece of vertex information is added. Figure 5F shows a TriangleFan comprising 5 triangles which share a common vertex 1. The first triangle requires 3 pieces of vertex information whereas succeeding triangles are drawn whenever a single piece of vertex information is added. Figure 5G shows two independent rectangles known as Sprites. Each Sprite is drawn using 2 pieces of vertex information representing diagonally opposite corners of the rectangle.

The general drawing procedure performed by the Graphics Synthesiser 200 involves: firstly setting the primitive type and initialising the condition of a vertex queue; secondly setting vertex information including drawing co-ordinates, vertex colour, texture co-ordinates and fog coefficients, in vertex information setting registers; thirdly performing a "vertex kick" operation whereby vertex information set up to this point is placed in the vertex queue and the queue goes one step forward; and finally, when the necessary vertex information is arranged in the vertex queue, commencing the drawing process.

It is necessary to provide an interface in order to import video and audio data into the PlayStation2. The HDD 900 requires video data in MPEG2 I-frame only format and audio data in PCM format so that hardware is required to convert either DV streams or analogue video/audio into the format required by the HDD. Hardware must also be provided to allow the output video and audio to be converted back to DV format so that it can be digitally recorded by the user.

Figure 6 schematically illustrates a system architecture having a peripheral component interconnect (PCI) plug-in module for digital video input/output. This apparatus comprises the Sound Processor Unit 300, the IOP 700, the Emotion Engine 100 and the Graphics Synthesiser 200 of the PlayStation2 main unit as described above with reference to Figure 1. The apparatus of Figure 6 also comprises a PCI interface 902 to which additional hardware module 904 comprising a hard disc drive (HDD) 906 and a DV/MPEG2 plug-in module 908 is connected. The IOP 700 is provided with 2 USB ports, 2 controller ports and 2 memory card ports and a full-speed 400Mbps IEEE 1394 (iLink) port 702. DV video is a compression standard for camcorders and video tape recorders. DV format data is stored in binary format rather than analogue format. MPEG2 is a standard developed by the Moving Pictures Expert Group. It is a digital encoding technology capable of encoding a video plus audio bitstream at variable encoding rates up to 15Mbits/s, with the video occupying up to 9.8Mbit/s. MPEG2 encoding is used on DVDs.

The so-called "iLink" is the Sony Corporation implementation of the IEEE1394 High Performance serial Bus standard. This standard describes a serial bus or pathway between one or more peripheral devices and a microprocessor device. The iLink provides a single plug-and-socket connection on which up to 63 peripheral devices can be attached. The iLink port 702 of the IOP 700 can be used to import DV video which is routed through to the DV/MPEG2 plug-in module 908 that is attached to the PCI port 902. Using this apparatus output video may be converted from MPEG2 to DV and output through the iLink port 702. To facilitate input of analogue input video/audio data (such as S-Video or Composite video and stereo audio) additional connectors (not shown) must be inserted in the hardware module 904.

The DV/MPEG2 module 904 is used to convert input video data in DV format to MPEG2 video and Pulse Code Modulated (PCM) audio which is then stored on the HDD 906 on input. At the output stage the hardware module 904 may be used to convert output video and audio into DV format which is output via the iLink port 702.

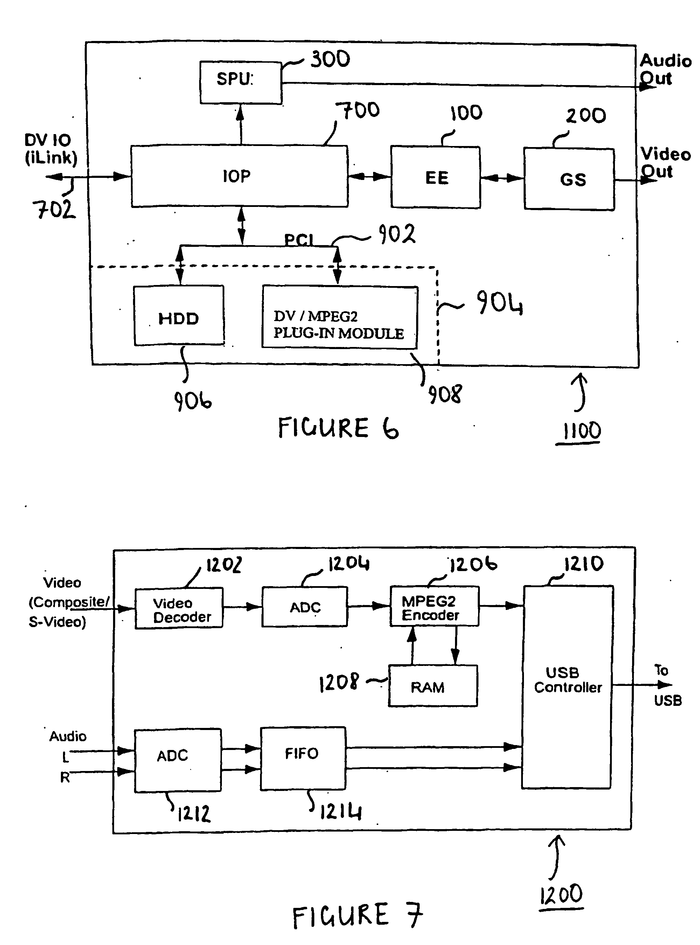

Figure 7 schematically illustrates a Universal Serial Bus (USB) analogue input module for importing video and audio data into the PlayStation2. USB provides essentially the same plug-and-play capability as the IEEE1394 standard and it is a less expensive technology. However the data transfer rate of USB is limited to 12 Mbps (whereas IEEE 1394 provides up to 400 Mbps). Although 12Mbps is sufficient bandwidth to support an MPEG2 I-Frame compressed video stream it is not sufficient bandwidth to support transport of an uncompressed MPEG2 stream back out of the apparatus for conversion back to DV output format. The USB port is capable of supplying limited power (up to 500mA at 5V) to peripheral devices although this limited power is unlikely to be able to sustain a DV codec as well as an MPEG2 encoder.

The USB module 1200 illustrated in Figure 7 is nevertheless suitable for use with analogue camcorders since the USB power and bandwidth are sufficient to support analogue-to-MPEG2 conversion. The module 1200 takes analogue video data as input and supplies it in sequence to a video decoder 1202, an analogue-to-digital (ADC) converter and an MPEG2 encoder 1206 which has an dedicated a RAM module 1208. Audio data is input to the module and left and right (L and R) audio channels are fed first through an ADC module 1212, the digital output of which is temporarily stored in a FIFO buffer 1214. Both the MPEG2 video data output by the encoder 1206 and the digital audio data from the FIFO buffer are supplied to a USB controller 1210. The USB controller supplies the data to the PlayStation2 via a USB port.

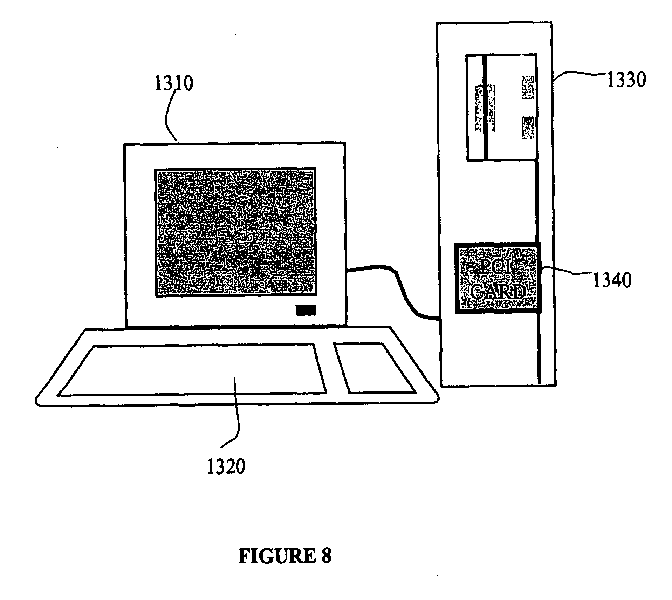

Figure 8 schematically illustrates an embodiment of the invention in which the circuitry required to implement the real-time video editing is provided on a PCI card fitted to a standard personal computer (PC). This figure comprises a monitor 1310, a keyboard 1320, a system unit 1330 and a PCI card 1340 fitted within the system unit 1330. In this embodiment the SPU 300, IOP 700, Emotion Engine 100, Graphics Synthesiser 200 and DV/MPEG2 module 908 functionality is all provided via the PCI card 1340. In this case the hard disc drive of the PC itself is used to import video and audio data to the system.

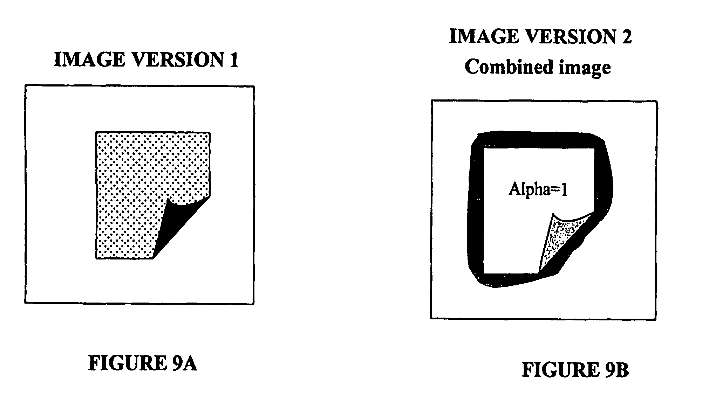

Figure 9A schematically illustrates an image in which standard Playsation2 anti-aliasing of graphics primitives has been applied. In creating image version 1 of Figure 9A a video background image is created. The background image is simply untransformed full-screen video which is drawn as a textured sprite that is the full size of the screen. No tiling of graphics primitives, anti-aliasing or lighting effects are required. In subsequent stages the background image is alpha-blended with the foreground using the alpha values of the foreground image.

The foreground image in Figure 9A is in the form of a page of which the lower right hand corner has been curled over. Construction of the curled over corner portion of the foreground image involves non-linear 3D effects. The foreground image is built up from a contiguous group of tiled graphics primitives and each graphics primitive has a texture mapped onto it. The 3D effect is drawn in small tiles (of approximately 8 pixels by 8 field lines) which are arranged in horizontal triangle strips. The non-linear effect is calculated on a row by row basis in the CPU core 102 of the emotion engine. The CPU core 102 then passes the co-ordinates associated with the non-linear effect to vector unit one 108 where the linear part of the 3D effect (i.e. translation and rotation) is carried out.

Vector unit one 108 also calculates the appropriate lighting for each tile vertex of the page curl. The appropriate lighting is determined from the angle between the normal to the tile at that vertex and the line connecting the light source to the vertex. The lighting effects are implemented using a combination of RGB gain and white fogging. However, for portions of the page curl surface that are almost perpendicular to the plane of the screen the lighting values are not applied to Alpha (although RGB lighting is still applied). Such portions of the image are identified as those for which the non-linear part of the transform does not change the z value of any of the vertices of the primitive.

Vector unit one 108 outputs the parameters for the transformed vertices, including lighting values and the texture co-ordinates corresponding to each vertex to the graphics synthesiser 200 for rendering.

In the special case of a fade operation, it is necessary to draw the foreground video image first and then use the foreground alpha value to mix with the background image, which is added later. Otherwise, if the foreground video overlaps itself and is faded then the overlapping video will mix with the video underneath it so that the amount of background video showing through would vary with the number of overlapping layers - this looks unnatural. This is avoided by drawing the foreground first so that the alpha value used to blend with the background is that associated with the top layer of foreground video. The case of a fade operation is an exception. For all other operations drawing foreground objects before background objects is likely to result in a reduction in image quality.

The foreground image of Figure 9A has anti-aliasing applied to the perimeter of each graphics primitive. Accordingly, we shall refer to this as the "primitive processed" image. As described above, the anti-aliasing process performed by the graphics synthesiser 200 involves calculating a "coverage" (which is the ratio of the area of the actual line which covers each pixel) to each pixel at the edge of the graphics primitive. The coverage value is assumed to be the alpha value for the pixel and alpha blending is performed on the destination colour (i.e. the colour in the background of the graphics primitive) and the graphics primitive colour. The anti-aliasing has the effect of blurring the edges of the graphics primitives in the primitive processed image. Although this effectively destroys detail, it generally has beneficial effects in enhancing visual appearance of the image. However when performing video processing where the drawing order is unpredictable the anti-aliasing around the perimeter of the graphics primitives results in undesirable patterning in the body of the image associated with the blurred edges of the graphics primitives. Furthermore the alpha values of the edges of the graphics primitives are altered during the anti-aliasing procedure so that the graphics primitive edges become semi-transparent. The anti-aliased edges do however improve the image appearance around the periphery of the page.

Figure 9B schematically illustrates an image created by superposing a non anti-aliased version of the image over the primitive processed foreground image of Figure 9A. To overcome the undesirable patterning effect in the body of the primitive processed image of Figure 9A a non primitive processed version of the foreground image is generated i.e. an "original image" version in which the graphics primitive edges have not been anti-aliased. The original image is superposed over the primitive processed image to produce image version 2 which is the "combined" image shown in Figure 9B. Since the peripheral edges of the primitive processed foreground image have been blurred due to the anti-aliasing these blurred edges extend outside the area occupied by the original image and thus remain exposed following the superposition. For the purposes of the superposition the alpha=1 for all pixels of the original image i.e. it is completely opaque so that it totally obscures the underlying primitive processed image region. In the exposed peripheral region of the primitive processed image the alpha value corresponds to the value calculated from the coverage ratio during the anti-aliasing process. A z test is performed to determine which part of the image is on top: If $z_{new} >= z_{old}$ then the new pixel value is visible on top of the old pixel value and is therefore rendered.

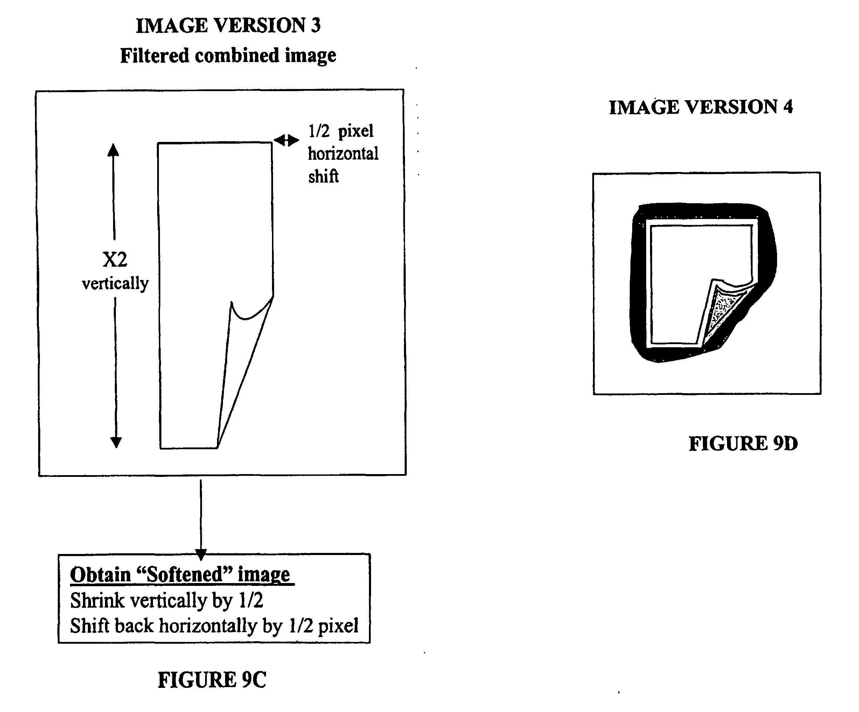

Figure 9C schematically illustrates the process by which horizontal and vertical filtering of the full screen of video corresponding to the combined image of Figure 9B is performed to produce a softened image version. The combined image version is manipulated to produce a softened image. Horizontal filtering is achieved by shifting the image by ½ pixel horizontally, which forces interpolation. A simple shift would not be as effective a filter in the vertical direction because of the interlaced nature of the image. Instead, vertical filtering is achieved by doubling the vertical size of the image to force interpolation of pixel values that must be inserted to double the vertical extent. The image is subsequently reduced in size vertically by ½ so that an averaging of pixel values is achieved and the image is shifted back horizontally by ½ pixel. The result of this horizontal and vertical filtering is a "softened" image version. This softened image version will be used to replace predetermined regions of image version 2 illustrated in Figure 9B.

Figure 9D schematically illustrates how a final anti-aliased image is produced by replacing portions of image version 2 of Figure 9B with corresponding portions of the softened image of Figure 9C. The softened image version is used to replace a region of one graphics primitive (8 pixels wide in this embodiment) just inside the peripheral boundary of the non-anti-aliased region in Figure 9B. A peripheral region of image version 2 is replaced by the corresponding portion of the softened image. Any image region for which the alpha value is less than one is replaced at this stage by the corresponding region of the softened image. This will include regions associated with the pagecurl effect shown in Figure 9D.

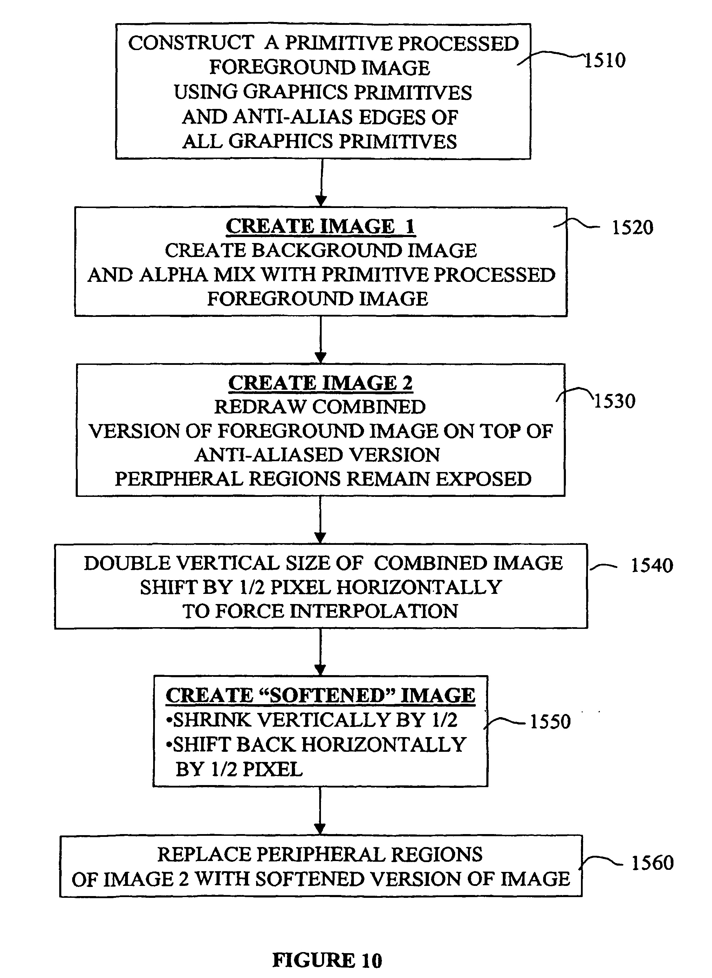

Figure 10 is a flow chart outlining the stages involved in construction of the final version of the anti-aliased image. At stage 1510 a primitive processed foreground image is constructed from a group of graphics primitives and the perimeter of each graphics primitive is anti-aliased. At stage 1510 a background image is created from a single sprite the size of the full screen and the background video is alpha blended with the foreground video using the foreground's alpha values to create image 1 of Figure 9A. At stage 1530 an original non anti-aliased version of the foreground image is drawn on top of the primitive processed version. Due to the blurring of edges resulting from anti-aliasing , the outer periphery of the underlying primitive processed image remains exposed. At stage 1540 the combined image of Figure 9B is doubled in size vertically and shifted by ½ pixel horizontally to force interpolation of pixel values. At stage 1550 the combined image is reduced in size by ½ and shifted back horizontally by ½ pixel. The result is a softened image which has been horizontally and vertically filtered. Finally at stage 1560 the softened image is used to replace the image regions for which alpha is less than one, including the peripheral regions of image 2.

It will be appreciated from the above that the invention may be implemented as computer software, which may be supplied on a storage medium or via a transmission medium such as a network or the internet.

## Claims

1. A video processing method for preparing an anti-aliased foreground image for display over an image background, the method comprising the steps of:

> (i) preparing the image background for display;
> (ii) generating an original foreground image by manipulation of a contiguous group of graphics primitives;
> (iii) applying anti-aliasing filtering to the edges of each primitive to generate a primitive-processed image;
> (iv) superposing the primitive-processed image over the image background; and
> (v) superposing the original foreground image over the primitive-processed image.

2. A method according to claim 1, in which the result of step (v) is a combined image, the method comprising the steps of:

> (vi) low-pass filtering the combined image to generate a low-pass filtered foreground image;
> (vii) detecting peripheral edge regions of the group of graphics primitives; and
> (viii) superposing only the peripheral edge regions of the low-pass filtered image over the combined image.

3. A method according to claim 2, in which the low-pass filtering step comprises a horizontal low-pass filtering step and a vertical low-pass filtering step.

4. A method according to claim 3, in which the horizontal low-pass filtering step comprises:

interpolating a pixel-shifted version of the original foreground image, the pixel-shifted image being shifted horizontally by a non-integral number of pixels; and
shifting the pixel-shifted image back by the non-integral number of pixels.

5. A method according to claim 4, in which the non-integral number of pixels is half a pixel.

6. A method according to any one of claims 3 to 5, in which the vertical low-pass filtering step comprises:

interpolating a vertically-expanded image from the original foreground image; and
interpolating a non-vertically expanded image from the vertically expanded image.

7. A method according to claim 6, in which the vertically expanded image is expanded by a vertical factor of 2.

8. A method according to any one claims 2 to 7, in which:

each pixel of the original foreground image has an associated transparency coefficient;
and in which steps (vi) and (viii) comprise:
setting the transparency coefficient to a value indicative of a high degree of transparency for pixels near a peripheral edge of the group of graphics primitives; and
writing the low-pass filtered image over the original foreground image so that the original foreground image is modified by pixels of the low-pass filtered image in dependence on the transparency coefficient associated with each display position of the original foreground image.

9. A method according to claim 8, in which step (ii) comprises:

applying a transformation to a source image to generate the original foreground image, the transformation including manipulating parts of the source image so as not to be oriented parallel to the display plane;
and in which the setting step comprises:
setting the transparency coefficient associated with pixels of the original foreground image representing image regions of the original foreground image which are not oriented parallel to the display plane to a value indicating a non-zero degree of transparency.

10. A method according to claim 9, in which the setting step comprises:

setting the degree of transparency for pixels of the original foreground image representing image regions of the original foreground image which are not oriented parallel to the plane of the image background to a value dependent on the angle between those image regions and the display plane.

11. A method according to claim 9 or claim 10, in which the setting step comprises:

setting the transparency coefficient associated with pixels within a graphics primitive to a value indicating a non-zero degree of transparency only if the primitive does not form part of a contiguous parallel set of primitives.

12. Computer software having program code for carrying out a method according to any one of the preceding claims.

13. A providing medium for providing software according to claim 12.

14. A medium according to claim 13, the medium being a transmission medium.

15. A medium according to claim 13, the medium being a storage medium.

16. Video processing apparatus for preparing an anti-aliased foreground image for display over an image background, the apparatus comprising:

means for preparing the image background for display;
means for generating an original foreground image by manipulation of a contiguous group of graphics primitives;
an anti-alias filter for applying anti-aliasing filtering to the edges of each primitive to generate a primitive-processed image;
means for superposing the primitive-processed image over the image background; and
means for superposing the original foreground image over the primitive-processed image.

**Patentansprüche**

1. Videoverarbeitungsverfahren zum Vorbereiten eines Bildglättungs-Vordergrundbilds zur Anzeige über einem Bildhintergrund, wobei das Verfahren folgende Schritte aufweist:

   (i) Vorbereiten des Bildhintergrunds zur Anzeige;
   (ii) Erzeugen eines ursprünglichen Vordergrundbilds durch Manipulation einer angrenzenden Gruppe von Grafikgrundelementen;
   (iii) Anwenden von Bildglättungsfilterung auf die Ränder jedes Grundelements, um ein grundelement-verarbeitetes Bild zu erzeugen;
   (iv) Überlagern des grundelement-verarbeiteten Bilds über dem Bildhintergrund; und
   (v) Überlagern des ursprünglichen Vordergrundbilds über dem grundelement-verarbeiteten Bild.

2. Verfahren nach Anspruch 1, bei dem das Ergebnis von Schritt (v) ein kombiniertes Bild ist, wobei das Verfahren folgende Schritte aufweist:

   (vi) Tiefpassfiltern des kombiniertes Bilds, um ein tiefpass-gefiltertes Vordergrundbild zu erzeugen;
   (vii) Ermitteln von peripheren Randbereichen der Gruppe von Grafik-Grundelementen; und
   (viii) Überlagern lediglich der peripheren Randbereiche des tiefpass-gefilterten Bilds über dem kombinierten Bild.

3. Verfahren nach Anspruch 2, bei dem der Tiefpass-Filterungsschritt einen Horizontal-Tiefpass-Filterungsschritt und einen Vertikal-Tiefpass-Filterungsschritt aufweist.

4. Verfahren nach Anspruch 3, bei dem Horizontal-Tiefpass-Filterungsschritt aufweist:

   Interpolieren einer Pixel-Verschiebungs-Version des ursprünglichen Vordergrundbilds, wobei das pixel-verschobene Bild horizontal durch eine nicht-ganzzahlige Anzahl von Pixeln verschoben wird; und
   Verschieben des pixel-verschobenen Bilds zurück um die nicht-ganzzahlige Anzahl von Pixeln.

5. Verfahren nach Anspruch 4, bei dem die nicht-ganzzahlige Anzahl von Pixeln die Hälfe eines Pixels ist.

6. Verfahren nach einem der Ansprüche 3 bis 5, bei dem der Vertikal-Tiefpass-Filterungsschritt aufweist:

   Interpolation eines vertikal-expandierenden Bilds von dem ursprünglichen Vordergrundbild; und
   Interpolation eines nicht-vertikal-expandierenden Bilds von dem vertikal-expandierten Bild.

7. Verfahren nach Anspruch 6, wobei das vertikal-expandierte Bild um einen Vertikalfaktor von 2 expandiert wird.

8. Verfahren nach einem der Ansprüche 2 bis 7, bei dem:

   jedes Pixel des ursprünglichen Vordergrundbilds einen damit verknüpften Transparenz-Koeffizienten hat;
       und bei dem die Schritte (vi) und (viii) aufweisen:

   Einstellen des Transparenz-Koeffizienten auf einen Wert, der einen hohen Grad an Transparenz zeigt, für Pixel in der Nähe eines Umfangrands der Gruppe von Grafik-Grundelementen; und
   Schreiben des tiefpass-gefilterten Bilds über dem ursprünglichen Vordergrundbild, so dass das ursprüngliche Vordergrundbild durch Pixel des tiefpass-gefilterten Bilds in Abhängigkeit von dem Transparenz-Koeffizienten in Verbindung mit jeder Anzeigeposition des ursprünglichen Vordergrundbilds modifiziert wird.

9. Verfahren nach Anspruch 8, bei dem der Schritt (ii) aufweist:

Anwenden einer Transformation auf ein Quellenbild, um das ursprüngliche Vordergrundbild zu erzeugen, wobei die Transformation das Manipulieren von Teilen des Quellenbilds aufweist, um nicht parallel zur Anzeigeebene orientiert zu sein;

und bei dem der Einstellungsschritt aufweist:

Einstellen des Transparenz-Koeffizienten in Verbindung mit Pixeln des ursprünglichen Vordergrundbilds, welches Bildbereiche des ursprünglichen Vordergrundbilds darstellt, welche nicht parallel zur Anzeigeebene orientiert sind, auf einen Wert, der einen Nicht-Null-Grad an Transparenz zeigt.

**10.** Verfahren nach Anspruch 9, wobei der Einstellungsschritt aufweist:

Einstellen des Grads an Transparenz für Pixel des ursprünglichen Vordergrundbilds, welches Bildbereiche des ursprünglichen Vordergrundbilds darstellt, die nicht parallel zur Ebene des Bildhintergrunds orientiert sind, auf einen Wert in Abhängigkeit vom Winkel zwischen diesen Bildbereichen und der Anzeigeebene.

**11.** Verfahren nach Anspruch 9 oder 10, bei dem der Einstellungsschritt aufweist:

Einstellen des Transparenz-Koeffizienten in Verbindung mit Pixeln innerhalb eines Grafik-Grundelements auf einen Wert, der einen Nicht-Null-Grad an Transparenz zeigt, lediglich dann, wenn das Grundelement nicht einen Teil eines angrenzenden parallelen Satzes an Grundelementen bildet.

**12.** Computer-Software, die den Programmcode zum Ausführen eines Verfahrens gemäß einem der vorhergehenden Ansprüche hat.

**13.** Bereitstellungsmedium zum Bereitstellen von Software nach Anspruch 12.

**14.** Medium nach Anspruch 13, wobei das Medium ein Übertragungsmedium ist.

**15.** Medium nach Anspruch 13, wobei das Medium ein Speichermedium ist.

**16.** Videoverarbeitungsvorrichtung zum Vorbereiten eines Bildglättungs-Vordergrundbilds zur Anzeige über einem Bildhintergrund, wobei die Vorrichtung aufweist:

eine Einrichtung zum Vorbereiten des Bildhintergrunds zur Anzeige;
eine Einrichtung zum Erzeugen eines ursprünglichen Vordergrundbilds durch Manipulation einer angrenzenden Gruppe von Grafik-Grundelementen;
ein Bildglättungsfilter zum Anwenden von Bildglättungsfilterung auf die Ränder jedes Grundelements, um ein grundelement-verarbeitetes Bild zu erzeugen;
eine Einrichtung zum Überlagern des grundelement-verarbeiteten Bilds über dem Bildhintergrund; und
eine Einrichtung zum Überlagern des ursprünglichen Vordergrundbilds über dem grundelement-verarbeiteten Bild.

**Revendications**

**1.** Procédé de traitement vidéo pour préparer une image de premier plan soumise à effet anti-alias pour un affichage sur un arrière-plan d'image, le procédé comprenant les étapes de :

(i) préparation de l'arrière-plan d'image pour affichage ;
(ii) génération d'une image de premier plan originale par manipulation d'un groupe de primitives de graphique contiguës ;
(iii) application d'un filtrage anti-alias aux bords de chaque primitive afin de générer une image traitée en termes de primitive ;
(iv) superposition de l'image traitée en termes de primitive sur l'arrière-plan d'image ; et
(v) superposition de l'image de premier plan originale sur l'image traitée en termes de primitive.

**2.** Procédé selon la revendication 1, dans lequel le résultat de l'étape (v) est une image combinée, le procédé comprenant les étapes de :

(vi) filtrage passe-bas de l'image combinée afin de générer une image de premier plan filtrée passe-bas ;

(vii) détection de régions de bord périphérique du groupe de primitives de graphique ; et

(viii) superposition de seulement les régions de bord périphérique de l'image filtrée passe-bas sur l'image combinée.

3. Procédé selon la revendication 2, dans lequel l'étape de filtrage passe-bas comprend une étape de filtrage passe-bas horizontal et une étape de filtrage passe-bas vertical.

4. Procédé selon la revendication 3, dans lequel l'étape de filtrage passe-bas horizontal comprend :

l'interpolation d'une version décalée en termes de pixels de l'image de premier plan originale, l'image décalée en termes de pixels étant décalée horizontalement d'un nombre non entier de pixels ; et

décalage de l'image décalée en termes de pixels vers l'arrière du nombre non entier de pixels.

5. Procédé selon la revendication 4, dans lequel le nombre non entier de pixels est la moitié d'un pixel.

6. Procédé selon l'une quelconque des revendications 3 à 5, dans lequel l'étape de filtrage passe-bas vertical comprend :

l'interpolation d'une image décomprimée verticalement à partir de l'image de premier plan originale ; et

l'interpolation d'une image décomprimée non verticalement à partir de l'image décomprimée verticalement.

7. Procédé selon la revendication 6, dans lequel l'image décomprimée verticalement est décomprimée d'un facteur vertical de 2.

8. Procédé selon l'une quelconque des revendications 2 à 7, dans lequel :

chaque pixel de l'image de premier plan originale présente un coefficient de transparence associé ; et dans lequel les étapes (vi) et (viii) comprennent :

l'établissement du coefficient de transparence à une valeur qui est indicative d'un degré élevé de transparence pour des pixels à proximité d'un bord périphérique du groupe de primitives de graphique ; et l'écriture de l'image filtrée passe-bas sur l'image de premier plan originale de telle sorte que l'image de premier plan originale soit modifiée selon des pixels de l'image filtrée passe-bas en fonction du coefficient de transparence qui est associé à chaque position d'affichage de l'image de premier plan originale.

9. Procédé selon la revendication 8, dans lequel l'étape (ii) comprend :

l'application d'une transformation sur une image de source afin de générer l'image de premier plan originale, la transformation incluant la manipulation de parties de l'image de source de manière à ce qu'elles ne soient pas orientées parallèlement au plan d'affichage ; et dans lequel l'étape d'établissement comprend :

l'établissement du coefficient de transparence qui est associé à des pixels de l'image de premier plan originale représentant des régions d'image de l'image de premier plan originale qui ne sont pas orientées parallèlement au plan d'affichage à une valeur qui indique un degré de transparence non à zéro.

10. Procédé selon la revendication 9, dans lequel l'étape d'établissement comprend :

l'établissement du degré de transparence pour des pixels de l'image de premier plan originale représentant des régions d'image de l'image de premier plan originale qui ne sont pas orientées parallèlement au plan de l'arrière-plan d'image à une valeur qui dépend de l'angle entre ces régions d'image et le plan d'affichage.

11. Procédé selon la revendication 9 ou 10, dans lequel l'étape d'établissement comprend :

l'établissement du coefficient de transparence qui est associé à des pixels à l'intérieur d'une primitive de graphique à une valeur qui indique un degré de transparence non à zéro seulement si la primitive ne fait pas partie d'un jeu de primitives parallèles contiguës.

**12.** Logiciel d'ordinateur comportant un code de programme pour la mise en oeuvre d'un procédé selon l'une quelconque des revendications précédentes.

**13.** Support de fourniture pour fournir un logiciel selon la revendication 12.

**14.** Support selon la revendication 13, le support étant un support de transmission.

**15.** Support selon la revendication 13, le support étant un support de stockage.

**16.** Appareil de traitement vidéo pour préparer une image de premier plan soumise à effet anti-alias pour un affichage sur un arrière-plan d'image, l'appareil comprenant :

un moyen pour préparer l'arrière-plan d'image pour affichage ;
un moyen pour générer une image de premier plan originale par manipulation d'un groupe de primitives de graphique contiguës ;
un filtre anti-alias pour appliquer un filtrage anti-alias aux bords de chaque primitive afin de générer une image traitée en termes de primitive ;
un moyen pour superposer l'image traitée en termes de primitive sur l'arrière-plan d'image ; et
un moyen pour superposer l'image de premier plan originale sur l'image traitée en termes de primitive.

FIGURE 1

EP 1 383 315 B1

100

GS

110 — GIF

108 — VECTOR UNIT 1

106 — VECTOR UNIT 0

102 — CPU CORE

104 — FPU

112 — INTC

124

128 bit Main Bus

122 — SIF — IOP

120 — DRAMC — DRAM

118 — IPU

116 — DMAC

114 — TIMER

**FIGURE 2**

**FIGURE 3**

252

254

256

TEXTURE
DATA → TEXTURE MAPPING

FOGGING

ANTI-ALIASING

**PIXEL TEST**
ALPHA TEST
DEPTH TEST — 258

A, Z →

From memory

RGB → ALPHA BLENDING — 260

FORMATTING — 262

200

TO MEMORY I/F

**FIGURE 4**

FIG 5A

FIG 5B

FIG 5C

FIG 5D

FIG 5E

FIG 5F

FIG 5G

FIGURE 6

FIGURE 7

EP 1 383 315 B1

**FIGURE 8**

**IMAGE VERSION 1**

**FIGURE 9A**

**IMAGE VERSION 2**
**Combined image**

Alpha=1

**FIGURE 9B**

EP 1 383 315 B1

## IMAGE VERSION 3
### Filtered combined image

1/2 pixel horizontal shift

X2 vertically

**Obtain "Softened" image**
Shrink vertically by 1/2
Shift back horizontally by 1/2 pixel

**FIGURE 9C**

## IMAGE VERSION 4

**FIGURE 9D**

CONSTRUCT A PRIMITIVE PROCESSED
FOREGROUND IMAGE
USING GRAPHICS PRIMITIVES
AND ANTI-ALIAS EDGES OF
ALL GRAPHICS PRIMITIVES — 1510

**CREATE IMAGE 1**
CREATE BACKGROUND IMAGE
AND ALPHA MIX WITH PRIMITIVE PROCESSED
FOREGROUND IMAGE — 1520

**CREATE IMAGE 2**
REDRAW COMBINED
VERSION OF FOREGROUND IMAGE ON TOP OF
ANTI-ALIASED VERSION
PERIPHERAL REGIONS REMAIN EXPOSED — 1530

DOUBLE VERTICAL SIZE OF COMBINED IMAGE
SHIFT BY 1/2 PIXEL HORIZONTALLY
TO FORCE INTERPOLATION — 1540

**CREATE "SOFTENED" IMAGE**
•SHRINK VERTICALLY BY 1/2
•SHIFT BACK HORIZONTALLY
  BY 1/2 PIXEL — 1550

REPLACE PERIPHERAL REGIONS
OF IMAGE 2 WITH SOFTENED VERSION OF IMAGE — 1560

**FIGURE 10**